(19) Europäisches Patentamt
European Patent Office
Office européen des brevets

(11)  **EP 1 022 972 B2**

(12)  **NEUE EUROPÄISCHE PATENTSCHRIFT**

(45) Veröffentlichungstag und Bekanntmachung des Hinweises auf die Entscheidung über den Einspruch:
**12.09.2007   Patentblatt 2007/37**

(45) Hinweis auf die Patenterteilung:
**03.07.2002   Patentblatt 2002/27**

(21) Anmeldenummer: **98933459.4**

(22) Anmeldetag: **30.04.1998**

(51) Int Cl.:
***A47J 27/62*** *(2006.01)*

(86) Internationale Anmeldenummer:
**PCT/DE1998/001257**

(87) Internationale Veröffentlichungsnummer:
**WO 1998/048679 (05.11.1998 Gazette 1998/44)**

(54) **VERFAHREN ZUM INDIVIDUELLEN FÜHREN EINES GARPROZESSES UND ZUGEHÖRIGES GARGERÄT**

METHOD FOR CARRYING OUT AN INDIVIDUALIZED COOKING PROCESS AND COOKING DEVICE PERTAINING THERETO

PROCEDE POUR LA CONDUITE INDIVIDUELLE D'UN ROTISSAGE ET ROTISSOIRE CORRESPONDANTE

(84) Benannte Vertragsstaaten:
**AT BE CH DE DK ES FR GB IT LI NL SE**

(30) Priorität: **30.04.1997   DE 19718399**

(43) Veröffentlichungstag der Anmeldung:
**02.08.2000   Patentblatt 2000/31**

(73) Patentinhaber: **Rational AG**
**86899 Landsberg a. Lech (DE)**

(72) Erfinder:
• **LÖFFLER, Erhard**
**D-86842 Türkheim (DE)**
• **KOHLSTRUNG, Peter**
**D-86916 Kaufering (DE)**
• **SCHWEINFEST-FEILE, Thomas**
**D-82178 Puchheim (DE)**

(74) Vertreter: **Weber-Bruls, Dorothée**
**Forrester & Boehmert,**
**Pettenkoferstrasse 20-22**
**80336 München (DE)**

(56) Entgegenhaltungen:
**EP-A- 0 550 312         EP-A- 0 701 387**
**GB-A- 2 203 320         US-A- 4 281 022**

EP 1 022 972 B2

**Beschreibung**

Die Erfindung betrifft ein Verfahren zum Garen in einem Gargerät, nach dem Oberbegriff von Anspruch 1. Sie betrifft weiterhin ein Gargerät, in dem ein derartiges Verfahren implementiert ist.

Es sind Gargeräte bekannt, bei denen ein Kerntemperatursensor in ein Fleischstück eingeführt werden kann und der Garprozeß beendet wird, wenn die Kerntemperatur einen vorbestimmten Wert erreicht hat. Dabei kann vorgesehen sein, daß verschiedene Phasen des Zubereitungsvorgangs eingeleitet werden, wenn die Kerntemperatur weitere vorbestimmte Werte während des Garvorganges erreicht.

Diese Gargeräte ermöglichen jedoch einen optimalen Garprozeß nur unter ganz spezifischen Bedingungen hinsichtlich der Art, Menge und Größe des Gargutes.

Bei einer Steuerung des Garprozesses mit Hilfe der Kerntemperatur ist beispielsweise eine optimale Einleitung der Bräunungs- und Krustierphase für Fleischstücke verschiedener Dicke oder Größe nicht möglich, da der Wert der Kerntemperatur, bei dem beispielsweise die Krustierphase eingeleitet werden muß, für Fleischstücke unterschiedlicher Dicke verschieden ist.

Ebenso variiert der Zeitpunkt, an dem eine Bräunungs- oder Krustierphase eingeleitet werden muß, mit der Dicke und Größe eines Fleischstückes, so daß bei einer reinen Zeitsteuerung des Garprozesses, bei der die Bräunungs- oder Krustierphase zu einem festen Zeitpunkt nach dem Beginn des Garvorgangs eingeleitet wird, diese Phasen bei einer Änderung der Fleischdicke zu früh oder zu spät einsetzen und dementsprechend das Fleischstück zu schwach oder zu stark gebräunt wird. Der Zeitpunkt, bei dem eine Bräunungs- oder Krustierungsphase eingeleitet werden muß, hängt außerdem von der Menge des Gargutes in dem Garraum ab.

Es sind weiterhin Gargeräte bekannt, bei welchen durch einen Benutzer die Art und die Menge eines zuzubereitenden Gargutes eingegeben werden kann und welche daraufhin die erforderliche Garzeit sowie den zeitlichen Verlauf von Steuer- oder Regelgrößen des Gargeräts, wie der Temperatur oder der Feuchtigkeit in dem Garraum oder der Mikrowellenleistung, festlegen.

Mit Hilfe von zusätzlichen Eingabeparametern, die für den Zeitpunkt des Einleitens verschiedener Zubereitungsphasen relevant sind, beispielsweise der Dicke oder Größe eines Fleischstücks, ließe sich zwar bei diesen Geräten eine stärker auf die speziellen Eigenschaften des individuellen Garguts abgestellte Führung des Garprozesses erreichen. Dies würde jedoch zusätzlich Meß- und/oder Wiegevorgänge durch den Benutzer vor dem Inbetriebnehmen des Gargeräts erfordern und zu einer erheblichen Vergrößerung der Datenmenge führen, welche die Rechnereinheit des Gargeräts speichern und verwalten muß, um den für die jeweiligen Bedingungen optimalen Garprozeß zur Verfügung zu stellen zu können.

Die GB 2 206 222 A offenbart ein gattungsgemäßes Verfahren, bei dem der Garprozess in drei Phasen aufgeteilt wird, nämlich eine Einführungsphase, eine Kochphase und eine Abschlussphase, wobei in der Einführungsphase die Kerntemperatur im Wesentlichen nicht ansteigt, in der Kochphase die Kerntemperatur im Wesentlichen linear ansteigt und in der Abschlussphase sich die Kerntemperatur im Wesentlichen auf einem festgesetzten Endwert befindet. Eine Garprozessführung soll dabei ausschließlich während der Kochphase stattfinden, wobei Gardauer und Endkerntemperatur am Ende der Kochphase erreicht sein sollen. Ein Umschalten in eine andere Garphase, wie eine Bräunungs- und Krustierphase ist nicht offenbart.

Auch die US 4,154,855 betrifft ein Garverfahren, bei dem Umgebungsbedingungen des Garraums in Form der Feuchte und Temperatur im Garraum erfasst werden, um daraus Steigungsänderungen einer charakteristischen Feuchtekurve zu berechnen, die dann ihrerseits ein Indiz für die Temperatur eines Garguts, insbesondere in Form eines saftigen Nahrungsmittels, ist. Sobald die Steigungsänderung der charakteristischen Kurve die Null durchläuft, wird der Garvorgang beendet.

Die DE 40 32 949 A1 offenbart ein Verfahren zum Braten und Backen, bei dem eine Oberflächentemperatur und eine Kerntemperatur erfasst und mit einer Garzeit verknüpft werden, um dann mit Sollwerten verglichen zu werden, so dass in Abhängigkeit von besagtem Vergleich eine Steuerung stattfinden kann.

Aus der GB 2 203 320 A ist ein Verfahren bekannt, bei dem eine Kerntemperatur gemessen und dann mit einem Sollwert verglichen wird, um den Zeitpunkt vorherzusagen, an dem das Gargut fertig gegart ist.

Die EP 0 701 387 A2 offenbart ein Garverfahren, gemäß dem ohne Identifizierung eines Garguts der Garzustand desselben, insbesondere zur Bestimmung des Endzeitpunktes des Garvorgangs, über Feuchtemessungen ausgewertet wird.

In der US 4,281,022 ist ein Verfahren zum Kochen von dünnem Fleisch in einem Mikrowellenofen beschrieben, bei dem die Kerntemperatur über die Feuchtigkeit und die Temperatur im Garraum bestimmt wird, um wiederum den Garzustand errechnen zu können.

Es ist die Aufgabe der Erfindung, das gattungsgemäße Verfahren derart weiterzuentwickeln, daß unter Berücksichtigung der Menge oder der Größe eines Garguts ein Garphasenwechsel automatisch erfolgt, insbesondere eine Bräunungs- und Krustierphase optimal eingeleitet wird. Weiterhin soll ein zugehöriges Gargerät zur Verfügung gestellt werden.

Die, das Verfahren betreffende Aufgabe wird erfindungsgemäß durch ein Verfahren nach Anspruch 1 gelöst. Die Unteransprüche 2 bis 7 beschreiben bevorzugte erfindungsgemäße Verfahren.

Der Verlauf des Garprozesses der von zumindest einem gemessenen Wert der Garzustandsgröße abhängt, wird somit erfindungsgemäß in Abhängigkeit von einem oder mehreren Werten einer Ableitung einer Garzustandsgröße, insbesondere der Kerntemperatur, nach der Zeit während des Garprozesses geführt. Die Maßnahmen bei der Führung des Prozesses sind dabei anhand von vorgegebenen Kriterien eindeutig festgelegt, welche durch die Software des Gerätes und entsprechende Eingabeparameter implementiert werden können. Zum Führen des Garprozesses ist auch vorgesehen, daß während des Garvorgangs zumindest ein Wert einer den Garprozeß beeinflussenden Einstellgröße des Gargerätes in Abhängigkeit von einer Ableitung einer Garzustandsgröße nach der Zeit während des Garvorgangs festgelegt wird. Derartige Einstellgrößen können insbesondere Steuer- oder Regelgrößen wie die Temperatur oder die Feuchtigkeit in dem Garraum sein. Den Zeitpunkt des Endes des Garvorgangs auf der Grundlage von Werten zumindest einer Garzustandsgröße, die während des Garprozesses zu verschiedenen Zeiten ermittelt wurden, sowie eines vorgegebenen Endwertes der Garzustandsgröße am Ende des Garvorgangs zu bestimmen, ist dabei erfindungswesentlich. Es wird dabei die Zeitdauer bis zum Erreichen eines durch den besagten Endwert festgelegten Endzustands extrapoliert, die aufgrund des bisherigen Garverlaufs zu erwarten ist. Damit können Maßnahmen bei der Führung des Garprozesses zeitlich auf das Ende des Garvorgangs bezogen werden, in Abkehr von der traditionellen, auf den Beginn des Garvorgangs bezogenen zeitlichen Steuerung. Insbesondere können einzelne Zubereitungsphasen so auf das Ende des Garvorgangs abgestimmt werden, daß eine "Punktlandung" erreicht wird, bei der alle gewünschten Eigenschaften des fertig zubereiteten Garguts, z.B. Bräunung, Garzustand im Kern eines Fleischstücks usw., gleichzeitig erreicht werden.

Zeitpunkt und Umfang einer bestimmten Maßnahme während des Garprozesses, etwa das Umschalten auf einen anderen Betriebsmodus oder das Einstellen einer Steuergröße auf einen bestimmten Wert, hängen erfindungsgemäß zumindest nicht ausschließlich von dem jeweils aktuellen Meßwert einer Garzustandsgröße ab, sondern insbesondere von dem vorangegangenen zeitlichen Verhalten dieser Garzustandsgröße, das sich mathematisch durch die Angabe des Wertes einer oder mehrerer Ableitungen nach der Zeit charakterisieren läßt. Gemäß einer bevorzugten Ausführungsform der Erfindung ist vorgesehen, die erste Ableitung einer Garzustandsgröße nach der Zeit bzw., gemäß einer weiteren Ausgestaltung, die erste und zweite Ableitung dieser Größe nach der Zeit zur Führung des Garprozesses heranzuziehen. Diese Ableitungen können beispielsweise durch Berechnen auf der Grundlage von zu verschiedenen Zeiten aufgenommenen Meßwerten ermittelt werden, wobei eine explizite Berechnung einer dieser Ableitungen nicht notwendigerweise erforderlich ist, sofern das Ergebnis des Verarbeitungsprozesses funktional von dem tatsächlich gegebenen Wert der Ableitung einer Garzustandsgröße abhängt. Der Begriff "Ableitung" soll hier nicht im streng mathematischen Sinn verstanden werden, sondern auch Approximationen von Ableitungen, etwa durch den zugehörigen Differenzenquotienten, mitumfassen.

Es kann erfindungsgemäß insbesondere vorgesehen sein, daß während des Garvorgangs ein Wert oder eine zeitliche Abfolge von Werten einer Einstellgröße des Gargeräts in Abhängigkeit von dem zuletzt ermittelten Wert einer Garzustandsgröße und dem zugehörigen Wert ihrer ersten Ableitung nach der Zeit festgelegt werden. Statt dem aktuellen Wert der Garzustandsgröße kann auch die Zeit seit dem Beginn des Garvorgangs als zweiter Parameter für die Festlegung des oder der Werte der Einstellgröße neben der besagten Ableitung herangezogen werden.

Die Einstellgröße kann also, ggf. bis zu einer Neufestlegung auf der Grundlage von aufgenommenen Meßwerten, auf einen festen Wert festgelegt werden oder es kann eines von mehreren Steuerprogrammen gestartet werden, welches für eine vorbestimmte Zeitdauer, ggf. auch bis zum Ende des Garprozesses, den Wert der Einstellgrößen entsprechend einem vorgegebenen zeitlichen Ablauf regelt oder steuert, wobei der eingestellte Wert bzw. das ausgewählte Programm sowohl von dem jeweiligen Meßwert einer Garzustandsgröße und/oder der Zeit seit dem Beginn des Garvorgangs als auch von der besagten ersten Ableitung abhängen.

Dabei können ein oder mehrere Werte von Einstellgrößen in Abhängigkeit von einer Zeitdauer festgelegt werden, über welche die erste Ableitung einer Garzustandsgröße nach der Zeit im wesentlichen gleich Null ist, beispielsweise die Totzeit der Kerntemperatur zu Beginn eines Garprozesses.

Die Temperatur und/oder die Feuchtigkeit in dem Garraum können Einstellgrößen des Gargeräts sein, deren Wert in Abhängigkeit von einer Ableitung einer Garzustandsgröße nach der Zeit festgelegt wird.

Eine bevorzugte Variante des erfindungsgemäßen Verfahrens besteht darin, daß der Zeitpunkt des Endes des Garvorgangs auf der Grundlage des zuletzt ermittelten Wertes einer Garzustandsgröße, der zugehörigen Werte ihrer ersten und zweiten Ableitung nach der Zeit sowie eines vorgegebenen Endwertes der Garzustandsgröße am Ende des Garvorgangs berechnet wird, wofür gängige mathematische Extrapolationsverfahren zur Verfügung stehen. Auf diese Weise läßt sich eine Genauigkeit im Minutenbereich erreichen.

Gemäß einer weiteren Ausführungsform ist vorgesehen, daß der Zeitpunkt des Endes des Garvorgangs zu verschiedenen Zeitpunkten unter Heranziehung der jeweils zuletzt aufgenommenen Meßwerte ermittelt wird, wobei für das weitere Verfahren der jeweils zuletzt berechnete Wert für das Ende des Garvorgangs verwendet werden kann. Damit wird die Prognose für das Ende des Garvorgangs aktualisiert und die Genauigkeit der Prognose und damit auch der Prozeßführung verbessert.

Die Erfindung sieht vor, daß ab einem Zeitpunkt mit einem vorbestimmten zeitlichen Abstand zu dem ermittelten Ende des Garvorgangs eine oder mehrere Einstellgrößen des Gargeräts auf einen vorab festgelegten Wert oder entsprechend einer festgelegten zeitlichen Folge von Werten eingestellt werden.

Beispielsweise kann auf der Grundlage einer eingegebenen gewünschten Gartemperatur und ggf. eines gewünschten Feuchtegrades, die am Ende des Garprozesses vorliegen sollen, mit Hilfe von bekannten Krustier- und Bräunungstabellen die Länge der Krustier- und Bräunungsphase festgelegt werden. Ein herkömmlicher Krustier- und Bräunungsvorgang wird dann auf der Grundlage der aus den entsprechenden Tabellen ermittelten Werte mit einem zeitlichen Abstand zu dem prognostizierten Ende des Garvorgangs gestartet, welcher der optimalen Bräunungs- und Krustierdauer entspricht. Es ist also beispielsweise möglich, ohne vorherige Wiegungen und Messungen einen gewünschten Garungsgrad im Inneren eines Fleischstücks (durchgebraten, medium etc.) bei gleichzeitiger optimaler Bräunung und Kruste auf der Außenseite zu erreichen.

Insbesondere kann die Kerntemperatur des Gargutes eine Garzustandsgröße sein, in Abhängigkeit von deren zeitlichem Verhalten ein Wert einer Einstellgröße festgelegt wird. Andere mögliche Garzustandsgrößen, die zur Führung des Garprozesses verwendet werden können, sind beispielsweise die Bräunung des Garguts oder die Feuchtigkeit in seinem Inneren.

Die Erfindung kann einen Wechsel der Betriebsart des Gargeräts zu einem Zeitpunkt vorsehen, der von einem oder mehreren Werten einer Ableitung einer Garzustandsgröße abhängt, beispielsweise ein Ein- oder Ausschalten der Feuchtigkeitsregelung, ein Übergang von einem Mikrowellenbetrieb zu einem Heißluftbetrieb etc.

Erfindungsgemäß wird weiterhin ein Gargerät nach einem der Ansprüche 9 bis 15 zur Verfügung gestellt.

Somit können Sollwerte in einer Speichereinrichtung, insbesondere als numerische Daten, abgespeichert und durch Angabe von Adressdaten abrufbar sein, die einen Wert für die erste Ableitung einer Garzustandsgröße umfassen, so daß auf eine Eingabe des Wertes dieser Ableitung und ggf. weiterer Adressdaten, welche beispielsweise den aktuellen Wert der Garzustandsgröße oder die Art des Garguts betreffen können, ein Zugriff auf den zugehörigen abgespeicherten Sollwert erfolgt.

Das erfindungsgemäße Gargerät kann weiterhin für eine Beeinflussung von Einstellgrößen von Hand eingerichtet sein und eine Einrichtung zum Abspeichern der von der Steuereinrichtung oder von einem Bediener vorgegebenen Werte für Einstellgrößen zusammen mit den zugehörigen Meßwerten einer Garzustandsgröße und/oder einer oder mehrerer ihrer Ableitungen nach der Zeit derart aufweisen, daß die Steuereinrichtung auf der Grundlage der so abgespeicherten Daten eines früheren Garprozesses sowie der von einem oder mehreren Meßwertaufnehmern in einem aktuellen Garprozeß aufgenommenen Meßwerte die Abfolge von Werten der Einstellgrößen des früheren Prozesses reproduzieren kann.

Hierbei kann insbesondere beim Abspeichern eine Zuordnung von Werten der Ableitung einer Garzustandsgröße zu Sollwerten einer Einstellgröße des Gargeräts wie vorangehend beschrieben erzeugt werden.

Der Erfindung liegt die Erkenntnis zugrunde, daß sich durch das Heranziehen des zeitlichen Verhaltens von Meßgrößen, welche sich während des Garprozesses ändernde Eigenschaften des Gargutes betreffen, die Menge und insbesondere die Dicke des Gargutes bei der Führung des Garprozesses berücksichtigt werden kann. Beispielsweise hängt die Totzeit der Kerntemperatur, also diejenige Zeit nach dem Beginn des Garvorgangs, während der sich die Kerntemperatur nicht oder nur wenig ändert, unmittelbar mit der Dicke eines Fleischstückes zusammen. Ebenso hängt die Geschwindigkeit der Änderung der Kerntemperatur bei einem bestimmten Kerntemperaturwert oder zu einer bestimmten Zeit nach dem Beginn des Garvorgangs von der Dicke des Fleischstückes ab, so daß durch Einstellung der Sollwerte beispielsweise für die Temperatur im Garraum in Abhängigkeit von der Geschwindigkeit der Änderung der Kerntemperatur unterschiedliche Dicken des Gargutes berücksichtigt werden können. Weiterhin kann unter Berücksichtigung der Ableitungen von Garzustandsgrößen, beispielsweise der Kerntemperatur, die Zeitdauer bis zu dem Ende des Garvorgangs, welches durch einen Endwert der Gargröße vorgegeben ist, die erforderliche Garzeit mit einer Genauigkeit im Minutenbereich berechnet werden, so daß eine genaue und individuelle Berechnung der verbleibenden Garzeit möglich ist. Dies ermöglicht insbesondere die Einleitung von Zubereitungsphasen, die im wesentlichen durch eine feste Zeitdauer und Festwerte der Gargrößen bestimmt sind, etwa Bräunungs- oder Krustierphasen, zu dem optimalen Zeitpunkt vor dem Ende des Garvorgangs.

Weitere Merkmale und Vorteile der Erfindung ergeben sich aus der detaillierten Beschreibung eines Ausführungsbeispieles mit Bezug auf die beigefügten Zeichnungen.

Fig. 1 ist eine schematische Darstellung eines erfindungsgemäßen Gargerätes.

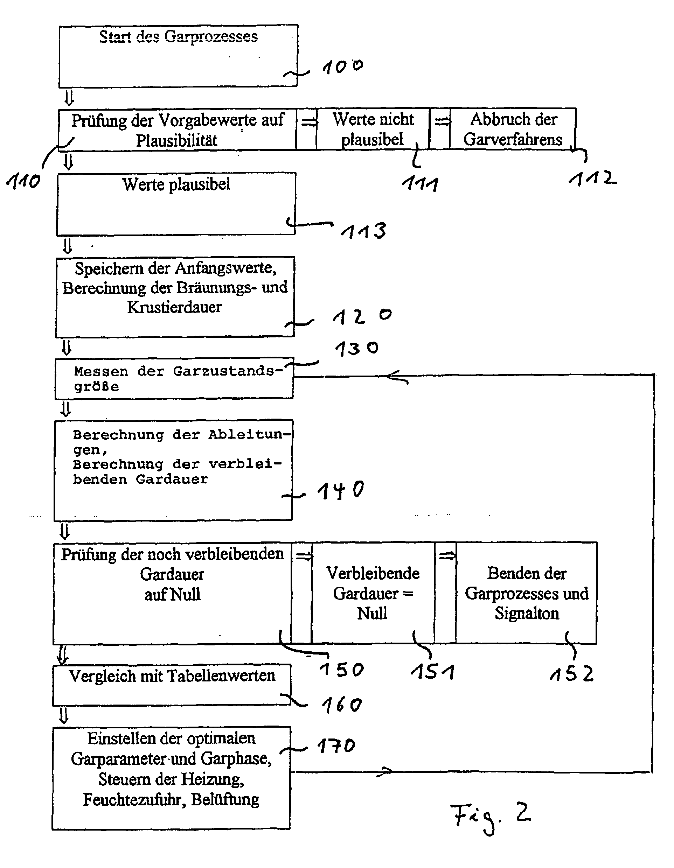

Fig. 2 ist ein Flußdiagramm einer Ausführungsform des erfindungsgemäßen Verfahrens.

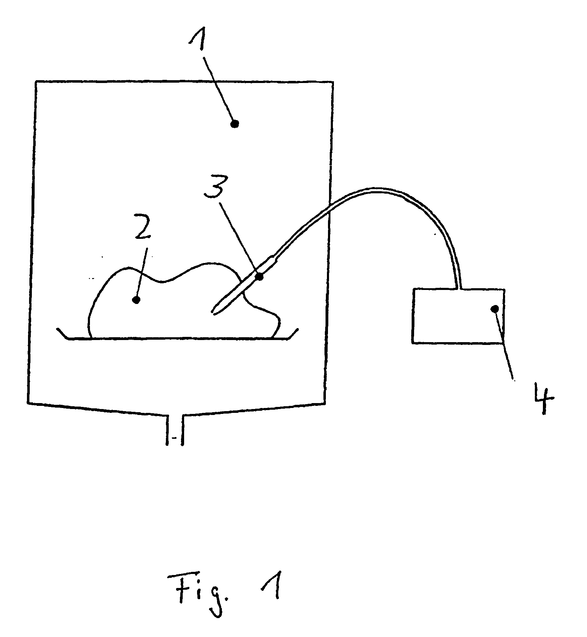

Fig. 1 zeigt in stark schematisierter Form ein Gargerät mit einem Garraum 1, in dem ein Gargut 2 aufgenommen ist. Ein Kerntemperaturfühler 3 ist in das Gargut eingeführt, welcher Signale zu einer Auswerteeinrichtung 4 leitet.

Das Gargerät arbeitet vorzugsweise als kombiniertes Dampf/Heißluftgerät, bei dem eine homogene Temperatur und eine homogene Feuchtigkeit in dem Garraum einstellbar sind, wobei das erfindungsgemäße Verfahren auch für andere Arten von Gargeräten implementierbar ist, beispielsweise für reine Heißluftgeräte, Mikrowellengeräte oder Geräte mit einer Kombination verschiedener Prinzipien. Der Kerntemperaturfühler ist vorzugsweise ein Temperaturfühler mit mehreren Aufnahmepunkten, wobei durch eine Mittelung der verschiedenen aufgenommenen Werte eine repräsentative Fleischkerntemperatur ermittelt wird oder die minimale Kerntemperatur ausgewählt werden kann. Es kann zusätzlich vorgesehen sein, mit einem weiteren Sensor, der entweder in den Meßfühler 3 integriert ist oder in Form eines weiteren Meßfühlers realisiert ist, eine Größe aufzunehmen, welche direkt mit der ersten Ableitung der Kerntemperatur nach der Zeit korreliert ist. Die entsprechenden Signale können dann nach einer entsprechenden Kalibrierung durch die Auswerteeinheit 4 von der Steuereinheit verwendet werden.

Das Gargerät weist weiterhin ein Anzeige- und Bedienelement auf, über welches Eingabeparameter durch den Benutzer eingegeben werden können, wobei die eingegebenen Parameter, das ausgewählte Garverfahren und/oder das aktuelle Stadium des Garprozesses auf der Anzeigeeinheit graphisch dargestellt werden können.

Weiterhin ist eine Datenschnittstelle vorhanden, mit der Daten in Speichereinheiten des Gargerätes eingelesen werden können.

Die Meßwerte für die Kerntemperatur werden über den Meßfühler 3 in regelmäßigen Zeitabständen aufgenommen und gespeichert. Die Auswerteeinheit 4 bestimmt aus den aufgenommenen Meßwerten die erste Ableitung der Kerntemperatur nach der Zeit in der Approxmation durch einen Differenzenquotienten $\Delta_1$ gemäß der Formel

$$\Delta_1 = (T_n - T_{n-1})/\Delta t, \qquad (1)$$

wobei $T_n$ der letzte und $T_{n-1}$ der vorletzte aufgenommene Wert der Kerntemperatur und $\Delta t$ das Zeitintervall zwischen zwei Messungen ist, und aus den letzten drei aufgenommenen Meßwerten die zweite Ableitung der Kerntemperatur nach der Zeit in einer Approximation durch einen Differenzenquotienten $\Delta_2$ gemäß der Formel

$$\Delta_2 = (T_n + T_{n-2} - 2\,T_{n-1})/\Delta t^2, \qquad (2)$$

wobei $T_{n-2}$ der vorvorletzte aufgenommene Wert der Kerntemperatur ist. Weiterhin extrapoliert die Auswerteeinheit 4 das zeitliche Verhalten der Kerntemperatur auf der Grundlage des zuletzt aufgenommenen Meßwertes, der aus den beiden letzten Meßwerten berechneten ersten Ableitung nach der Zeit und der aus den letzten drei Meßwerten berechneten zweiten Ableitung nach der Zeit und bestimmt anhand der so ermittelten Extrapolationskurve den Zeitpunkt, zu dem ein über die Eingabeeinrichtung vorgegebener Endwert für die Kerntemperatur erreicht ist. Durch die Einbeziehung der zweiten Ableitung nach der Zeit können Nichtlinearitäten in dem zeitlichen Verhalten der Kerntemperatur berücksichtigt werden und dementsprechend eine genauere Extrapolation als mit einer rein linearen Extrapolation erreicht werden. Es sollte an dieser Stelle angemerkt werden, daß die Extrapolation nicht notwendigerweise über den Zwischenschritt der expliziten Berechnung und Speicherung eines Differentialquotienten erster oder zweiter Ordnung verlaufen muß. Vielmehr können die Gleichungen (1) und (2) für die (approximierte) erste und zweite Ableitung unmittelbar in die Extrapolationsformel eingesetzt werden, die dann eine Funktion der aufgenommenen Meßwerte bildet, implizit jedoch weiterhin die Abhängigkeit von der ersten und zweiten Ableitung enthält. Diese substituierte Gleichung kann dann unmittelbar zur Extrapolation des Endes des Garvorgangs ohne den Zwischenschritt der Berechnung von $\Delta_1$ und $\Delta_2$ gemäß Gleichung (1) und (2) verwendet werden.

Die von der Auswerteeinrichtung ermittelten Größen werden zu einer Steuereinrichtung abgegeben. Die Steuereinrichtung greift auf abgespeicherte Tabellen zu, in denen für verschiedene Arten von Gargut, z. B. Schweinefleisch, Rindfleisch etc., die optimalen Werte der Einstellgrößen, hier die Temperatur und die Feuchtigkeit im Garraum, in verschiedenen Garphasen in Abhängigkeit von der Kerntemperatur und der ersten Ableitung der Kerntemperatur nach der Zeit gespeichert sind. Die Steuereinheit greift weiterhin auf eine Speichereinheit zu, in welcher die Länge der Bräunungs- und Krustierphase in Abhängigkeit von der Art des Gargutes und der Sollwerte für die Temperatur und gegebenenfalls die Feuchtigkeit im Garraum am Ende des Garprozesses festgelegt werden, die über die Eingabeeinrichtung eingegeben werden. Diese Speichereinheit entspricht also einer Reihe von Tabellen, welche für jedes Gargut einer bestimmten Endtemperatur und einer bestimmten Endfeuchtigkeit im Garraum eine bestimmte Länge der Krustier- bzw. Bräunungsphase zuordnen. Diese Tabellen sind so ausgelegt, daß das Bräunungsverhalten bis zu Temperaturen von 230°C leicht progressiv und darüber stark progressiv eintreten wird. Eine starke Progressivität dient der Erzielung einer intensiveren Bräunung und Krustierung. Gemäß einer Ausführungsvariante wird der Feuchtigkeitsgrad am Ende des Garprozesses nicht durch eine Benutzereingabe festgelegt, sondern ist ebenfalls tabelliert und wird durch das System auf der Grundlage der Eingabewerte für die Art des Gargutes und die Endtemperatur im Garraum aus einer entsprechenden Tabelle bestimmt.

Ein beispielhafter Ablauf des erfindungsgemäßen Garverfahrens wird im folgenden näher erläutert.

In einem Vorbereitungsschritt (nicht dargestellt) gibt der Benutzer die Art des Gargutes und eine gewünschte Kernendtemperatur ein. Weiterhin werden die Endtemperatur im Garraum sowie der Endfeuchtigkeitswert im Garraum eingegeben, welche zur Festlegung der Parameter der Bräunungs- und Krustierphase benötigt werden. Anschließend wird in dem Schritt 100 der Garprozeß gestartet.

In Schritt 110 findet eine Vorprüfung der Eingabewerte auf ihre Plausibilität statt, d.h. es wird überprüft, ob ein Prozeß mit den eingegebenen Parametern überhaupt durchgeführt werden kann. Ist dies nicht der Fall (Schritt 111), wird das Garverfahren abgebrochen (Schritt 112) und es erfolgt ein Warnsignal und/oder eine entsprechende Information des Benutzers über die Anzeigevorrichtung des Gargerätes.

Wenn die Vorgabewerte plausibel sind (Schritt 113), werden in Schritt 120 in Abhängigkeit von der Art des Gargutes und der gewählten Endkerntemperatur Anfangswerte für die Garraumparameter, also die Garraumtemperatur und die Feuchtigkeit in dem Garraum, bestimmt und abgespeichert. Diese Werte werden aus abgespeicherten Tabellen entnommen. Weiterhin werden die Bräunungs- und Krustierdauer auf der Grundlage der eingegebenen Werte für die Endtemperatur im Garraum und die Feuchtigkeit im Garraum anhand von abgespeicherten Tabellen bestimmt. Danach wird der eigentliche Garprozeß mit den ermittelten Anfangswerten eingeleitet.

In Schritt 130 wird nach Ablauf einer vorbestimmten Zeitdauer die Kerntemperatur in dem Fleischstück als Garzustandsgröße gemessen. In dem Schritt 140 werden auf der Grundlage der letzten drei Messungen der Kerntemperatur in dem Fleischstück die erste und die zweite zeitliche Ableitung der Kerntemperatur bestimmt und daraus die noch verbleibende Gardauer berechnet. In dem Schritt 150 wird überprüft, ob die verbleibende Gardauer Null ist. Wenn dies der Fall ist (Schritt 151) wird der Garprozeß beendet, und es wird ein Signalton erzeugt, welcher den Benutzer über das Ende des Garprozesses informiert (Schritt 152). Ist die verbleibende Gardauer ungleich Null, findet ein Vergleich der aktuellen Werte für die Feuchtigkeit und Temperatur in dem Garraum mit den Tabellenwerten, die für die gemessene Kerntemperatur und die berechnete erste Ableitung der Kerntemperatur abgespeichert sind, und ein Vergleich der verbleibenden Gardauer mit der Bräunungs- und Krustierdauer statt (Schritt 160). Ist die verbleibende Gardauer kleiner als die abgespeicherte Bräunungsund Krustierdauer, die in Schritt 120 berechnet wurde, wird auf einen Bräunungs- und Krustierprozeß übergegangen, bei dem die Temperatur und Feuchtigkeit in dem Garraum unabhängig von der erfaßten Kerntemperatur entsprechend von Tabellenwerten eingestellt sind, in denen das Bräunungsverhalten und das Krustierverhalten verschiedener Fleischarten abgespeichert ist.

Ist die noch verbleibende Gardauer größer als die berechnete Bräunungs- und Krustierdauer, ermittelt die Steuereinrichtung aus der abgespeicherten Tabelle die Werte der Temperatur und der Feuchtigkeit, welche der gemessenen Kerntemperatur und der berechneten ersten Ableitung der Kerntemperatur nach der Zeit zugeordnet sind. Entsprechen die beiden Eingangswerte, also die Kerntemperatur und ihre erste Ableitung nach der Zeit, nicht exakt tabellierten Werten, findet eine Interpolation der tabellierten Werte mit einem bekannten Interpolations- bzw. Datendekomprimierungsverfahren statt. Wenn die aktuellen Werte für die Temperatur und die Feuchtigkeit in dem Garraum von den sich aus der abgespeicherten Tabelle ergebenden Werten abweichen, werden die Garraumtemperatur und die Feuchtigkeit in dem Garraum durch Ansteuern der Heizung, der Feuchtezufuhr, der Belüftung etc. auf die optimalen Werte eingestellt (Schritt 170). Danach kehrt der Prozeß zu dem Schritt 130 zurück, indem ein neuer Wert für die Kerntemperatur im dem Fleisch aufgenommen wird. Danach wiederholt sich die durch die Schritte 140, 150, 160, 170 gebildete Schleife, bis sich in Schritt 150 ergibt, daß die noch verbleibende Gardauer gleich Null ist. Der zeitliche Abstand zwischen zwei Messungen (Schritt 130) ist dabei normalerweise konstant. In bestimmten Phasen des Garprozesses, beispielsweise in der Anfangs- oder Endphase, können unterschiedliche Zeitabstände verwendet werden, etwa um möglichst schnell ausreichend Daten zur Berechnung der Ableitungen in der Anfangsphase oder um eine bessere Genauigkeit der Extrapolation zu erhalten.

Wie vorangehend erwähnt wurde, sind zur Berechnung der zweiten Ableitung, die ihrerseits zur Berechnung der noch verbleibenden Gardauer verwendet wird, mindestens drei Meßpunkte erforderlich. Daher werden in den ersten drei Zyklen die Schritte 140, 150, 160 und 170 übersprungen, d.h. das System bestimmt zunächst drei aufeinanderfolgende Meßwerte der Kerntemperatur, bevor mit der eigentlichen Steuerung begonnen wird. In einer Abwandlung dieses Verfahrens kann während der ersten drei Zyklen eine vorläufige Anpassung der Temperatur und der Feuchtigkeit in dem Garraum auf der Grundlage von einem oder zwei vorhandenen Meßwerten der Kerntemperatur erfolgen.

In den in der Speichereinheit abgespeicherten Tabellenwerten für die Zuordnung von Temperatur und Feuchtigkeit im Garraum zu der Kerntemperatur und der ersten Ableitung der Kerntemperatur nach der Zeit ist - ebenso wie in den Tabellen für die Berechnung der Bräunungs- und Krustierdauer - Erfahrungswissen über Garprozesse zusammengefaßt, bei denen die Temperatur und die Feuchtigkeit in dem Garraum für die verschiedenen Phasen ganz oder teilweise von Hand durch einen Benutzer eingestellt wurden. Diese Tabellen können dadurch ergänzt und aktualisiert werden, daß neue tabellarische Zuordnungen in die Speichereinheit über die Datenschnittstelle des Gargerätes eingelesen werden bzw. alte Zuordnungen gelöscht werden. Es ist auch möglich, verschiedene Varianten von Garprozessen mit den gleichen Rahmenparametern einzuspeichern, die mit einem zusätzlichen Eingabeparameter über die Bedieneinheit ausgewählt werden können. Ebenso kann in den besagten Tabellen auch die Zeit seit dem Beginn des Garprozesses anstelle der Kerntemperatur als Zuordnungsparameter verwendet werden, welcher die Sollwerte bei dem Vergleich in Schritt 160 des vorangehend beschriebenen Verfahrens mitbestimmt.

Derartige Garprogramme müssen jedoch nicht notwendigerweise von außen über eine Schnittstelle vorgegeben werden, sondern können auch von dem Gerät selbst bei einem ganz oder teilweise von Hand gesteuerten Garprozeß ermittelt werden. Hierfür wird ein Speichermodus über das Anzeige- und Bedienelement des Gargerätes gewählt. In diesem Speichermodus werden die Temperatur und Feuchtigkeit in dem Garraum einerseits und die gemessene Kerntemperatur in dem Fleischstück und die hierzu berechnete erste Ableitung der Kerntemperatur nach der Zeit während eines Garprozesses, der ganz oder teilweise von Hand gesteuert wird, beispielsweise in regelmäßigen Abständen oder beim Übergang zwischen verschiedenen Zubereitungsphasen erfaßt und zusammen derart abgespeichert, daß die Kerntemperatur und die erste Ableitung der Kerntemperatur nach der Zeit als Addressenparameter für die Temperatur und die Feuchtigkeit in dem Garraum verwendet werden können. Dementsprechend kann der von Hand geführte Prozeß zu einem späteren Zeitpunkt automatisch wiederholt werden, indem das Gerät jeweils die ermittelten Werte für die Kerntemperatur und die erste Ableitung der Kerntemperatur Addressen von zwei Speicherfeldern zuordnet, in denen die Feuchtigkeit und die Temperatur des Garraums abgespeichert sind, die bei den von Hand geführten Prozeß bei den entsprechenden Werten der Kerntemperatur und ihrer Ableitung eingestellt waren. Auf diese Weise kann ein Benutzer, abgesehen davon, daß er vorgegebene optimierte Garprozesse übernimmt, einen Garprozeß auch entsprechend seinem eigenen Geschmack variieren und einrichten.

In der vorangehenden Beschreibung einer beispielhaften Ausführungsform wurde der Einfachheit halber der Fall betrachtet, daß nur eine einzige Garzustandsgröße zur Beeinflussung des Garprozesses herangezogen wurde. Erfindungsgemäß können jedoch auch verschiedene Garzustandsgrößen und ihre Ableitungen alternativ oder gleichzeitig zur Beeinflussung des Garprozesses, insbesondere für die Festlegung von Sollwerten für Einstellgrößen des Gargerätes verwendet werden, die wie vorangehend beschrieben anhand von abgespeicherten Tabellen ermittelt oder aufgrund von abgespeicherten Modellfunktionen berechnet werden können.

Die in der vorangehenden Beschreibung, in den Ansprüchen und in den Zeichnungen offenbarten Merkmale der Erfindung können sowohl einzeln als auch in beliebiger Kombination für die Realisierung der Erfindung in ihren verschiedenen Ausführungsformen wesentlich sein.

## Patentansprüche

1. Verfahren zum Garen in einem Gargerät mit einem Garraum (1) sowie einer Meßeinrichtung (3) zum Aufnehmen von Werten zumindest einer eine Eigenschaft des Garguts (2) betreffenden Garzustandsgröße, deren Wert sich aufgrund des Garprozesses ändert, wobei der Zeitpunkt des Endes des Garvorgangs zu verschiedenen Zeitpunkten während des Garvorganges unter Heranziehung der jeweils zuletzt aufgenommenen Meßwerte sowie eines vorgegebenen Endwertes, am Ende des Garvorgangs, einer Garzustandsgröße extrapoliert wird, der Verlauf des Garprozesses von zumindest einem gemessenen Wert einer Garzustandsgröße abhängt und in Abhängigkeit von einem oder mehreren Werten einer Ableitung zumindest einer Garzustandsgröße nach der Zeit während des Garprozesses geführt wird, und während des Garvorgangs zumindest ein Wert einer den Garprozeß beeinflussenden Einstellgröße des Gargerätes in Abhängigkeit von einer Ableitung einer Garzustandsgröße nach der Zeit während des Garvorgangs festgelegt wird, **dadurch gekennzeichnet, daß** ab einem Zeitpunkt mit einem vorbestimmten zeitlichen Abstand zu dem ermittelten Ende des Garvorgangs eine oder mehrere Einstellgrößen des Gargeräts auf einen vorab festgelegten Wert oder entsprechend einer festgelegten zeitlichen Folge von Werten eingestellt werden.

2. Verfahren nach Anspruch 1, **dadurch gekennzeichnet, daß** während des Garvorgangs ein Wert oder eine zeitliche Abfolge von Werten einer Einstellgröße des Gargeräts in Abhängigkeit von dem zuletzt ermittelten Wert einer Garzustandsgröße und dem zugehörigen Wert ihrer ersten Ableitung nach der Zeit festgelegt werden.

3. Verfahren nach Anspruch 1 oder 2, **dadurch gekennzeichnet, daß** ein oder mehrere Werte von Einstellgrößen in Anhängigkeit von einer Zeitdauer festgelegt werden, über welche die erste Ableitung einer Garzustandsgröße nach der Zeit im wesentlichen gleich Null ist.

4. Verfahren nach einem der vorangehenden Ansprüche, **dadurch gekennzeichnet, daß** die Temperatur und/oder die Feuchtigkeit im Garraum (1) eine Einstellgröße des Gargeräts ist, für die ein Wert in Abhängigkeit von einer Ableitung einer Garzustandsgröße nach der Zeit festgelegt wird.

5. Verfahren nach einem der vorangehenden Ansprüche, **dadurch gekennzeichnet, daß** der Zeitpunkt des Endes des Garvorgangs auf der Grundlage des zuletzt ermittelten Wertes einer Garzustandsgröße, der zugehörigen Werte ihrer ersten und zweiten Ableitung nach der Zeit sowie eines vorgegebenen Endwertes der Garzustandsgröße am Ende des Garvorganges berechnet wird.

**6.** Verfahren nach einem der vorangehenden Ansprüche,

**dadurch gekennzeichnet, daß**

die Kerntemperatur des Gargutes eine Garzustandsgröße ist, wobei in Abhängigkeit von dem zeitlichen Verhalten der Kerntemperatur ein Wert einer Einstellgröße des Gargeräts festgelegt wird.

**7.** Verfahren nach einem der vorangehenden Ansprüche,

**gekennzeichnet durch**

einen Wechsel der Betriebsart des Gargeräts zu einem Zeitpunkt, der von einem oder mehreren Werten einer Ableitung einer Garzustandsgröße abhängt.

**8.** Gargerät mit einem Garraum (1), zumindest einem Meßwertaufnehmer (3) zum Aufnehmen von Werten zumindest einer Garzustandsgröße, die eine Eigenschaft des Gargutes (2) betrifft und deren Wert sich aufgrund des Garprozesses ändert, einer Speichereinheit und einer Steuereinrichtung zum selbsttätigen Führen des Garprozesses, die als ein Eingangssignal das Ausgangssignal des Meßwertaufnehmers (3) empfängt und auf die Speichereinheit bei der Bestimmung von Sollwerten für eine Einstellgröße zugreift,

**dadurch gekennzeichnet, daß**

die Steuereinrichtung dafür eingerichtet ist, den Garprozeß gemäß einem Verfahren nach einem der vorangehenden Ansprüche zu führen.

**9.** Gargerät nach Anspruch 8, **gekennzeichnet durch** eine Einrichtung zum Eingeben und zum Speichern von Parameterwerten, betreffend das Gargut und/oder den Garprozeß, wobei die Steuereinrichtung einen oder mehrere dieser Parameterwerte als Eingangsgrößen zur Führung des Garprozesses heranzieht.

**10.** Gargerät nach Anspruch 9, **dadurch gekennzeichnet, daß** eine am Ende des Garprozesses zu erzielende Endkerntemperatur und/oder eine Temperatur im Garraum am Ende des Garprozesses eingebbar sind.

**11.** Gargerät nach Anspruch 9 oder 10, **dadurch gekennzeichnet, daß**

ein Wert für die Feuchtigkeit im Garraum am Ende des Garprozesses eingebbar ist.

**12.** Gargerät nach einem der Ansprüche 8 bis 11, **gekennzeichnet durch**

eine Speichereinheit, in welcher eine Zuordnung von Werten zumindest einer der Ableitungen einer Garzustandsgröße nach der Zeit zu Sollwerten von Einstellgrößen des Gargerätes festgehalten ist.

**13.** Gargerät nach einem der Ansprüche 8 bis 12, **dadurch gekennzeichnet, daß**

die Sollwerte in der Speichereinrichtung gespeichert und durch Angabe von Adressdaten abrufbar sind, die einen Wert für die erste Ableitung einer Garzustandsgröße umfassen.

**14.** Gargerät nach einem der Ansprüche 8 bis 13, **dadurch gekennzeichnet, daß**

das Gargerät für eine Beeinflussung von Einstellgrößen von Hand eingerichtet ist und eine Einrichtung zum Abspeichern der von der Steuereinrichtung oder von einem Bediener vorgegebenen Werte für Einstellgrößen zusammen mit den zugehörigen Meßwerten einer Garzustandsgröße und/oder einer oder mehrerer ihrer Ableitungen nach der Zeit derart aufweist, daß die Steuereinrichtung auf der Grundlage der so abgespeicherten Daten eines früheren Garprozesses sowie der von einem oder mehreren Meßwertaufnehmern in einem aktuellen Garprozeß aufgenommen Meßwerte die Abfolge von Werten der Einstellgrößen des früheren Prozesses reproduzieren kann.

**Claims**

**1.** Method for cooking in a cooking device having a cooking space (1) and a measuring device (3) for detecting values of at least one cooking state variable which relates to a property of the product (2) being cooked and whose value changes on account of the cooking process, with the time at which the cooking process ends being extrapolated at different times during the cooking process by using the measurement values detected last in each case and a prespecified end value, at the end of the cooking process, of a cooking state variable, with the course of the cooking process depending on at least one measured value of a cooking state variable and being conducted as a function of one or more values of a derivative of at least one cooking state variable with respect to time during the cooking process, and with at least one value of an adjustment variable of the cooking device which influences the cooking process being defined as a function of a derivative of a cooking state variable with respect to time during the cooking process, **characterized in that**, starting from a time which is at a predetermined time interval from the established end of the cooking process, one or more adjustment variables of the cooking device are adjusted to a predefined value or in accordance with a predefined time sequence of values.

**2.** Method according to Claim 1, **characterized in that**, during the cooking process, a value or a time sequence of values of an adjustment variable of the cooking device are defined as a function of the value of a cooking state variable established last and the associated value of its first derivative with respect to time.

3. Method according to Claim 1 or 2, **characterized in that** one or more values of adjustment variables are defined as a function of a time period over which the first derivative of a cooking state variable with respect to time is substantially equal to zero.

4. Method according to one of the preceding claims, **characterized in that** the temperature and/or the moisture in the cooking space (1) is an adjustment variable of the cooking device for which a value is defined as a function of a derivative of a cooking state variable with respect to time.

5. Method according to one of the preceding claims, **characterized in that** the time at which the cooking process ends is calculated on the basis of the value of a cooking state variable established last, the associated values of its first and second derivatives with respect to time, and a predefined end value of the cooking state variable at the end of the cooking process.

6. Method according to one of the preceding claims, **characterized in that** the core temperature of the product being cooked is a cooking state variable, with a value of an adjustment variable of the cooking device being defined as a function of the behaviour of the core temperature over time.

7. Method according to one of the preceding claims, **characterized by** a change in the type of operation of the cooking device at a time which depends on one or more values of a derivative of a cooking state variable.

8. Cooking device having a cooking space (1), at least one measurement-value sensor (3) for detecting values of at least one cooking state variable which relates to a property of the product (2) being cooked and whose value changes on account of the cooking process, a memory unit and a control device for automatically conducting the cooking process, which control device receives the output signal from the measurement-value sensor (3) as an input signal and accesses the memory unit when determining setpoint values for an adjustment variable, **characterized in that** the control device is designed to conduct the cooking process in accordance with a method according to one of the preceding claims.

9. Cooking device according to Claim 8, **characterized by** a device for entering and for storing parameter values relating to the product being cooked and/or to the cooking process, with the control device using one or more of these parameter values as input variables for conducting the cooking process.

10. Cooking device according to Claim 9, **characterized in that** a final core temperature which is to be reached at the end of the cooking process and/or a temperature in the cooking space at the end of the cooking process can be entered.

11. Cooking device according to Claim 9 or 10, **characterized in that** a value for the moisture in the cooking space at the end of the cooking process can be entered.

12. Cooking device according to one of Claims 8 to 11, **characterized by** a memory unit in which an assignment of values of at least one of the derivatives of a cooking state variable with respect to time to setpoint values of adjustment variables of the cooking device is recorded.

13. Cooking device according to one of Claims 8 to 12, **characterized in that** the setpoint values are stored in the memory device and can be called up by specifying address data which includes a value for the first derivative of a cooking state variable.

14. Cooking device according to one of Claims 8 to 13, **characterized in that** the cooking device is designed for adjustment variables to be influenced manually, and has a device for storing the values for adjustment variables, which are predefined by the control device or by an operator, together with the associated measurement values of a cooking state variable and/or one or more of its derivatives with respect to time in such a way that the control device can reproduce the sequence of values of the adjustment variables of the previous process on the basis of the data, which is stored in this way, from a previous cooking process and the measurement values which are detected in an current cooking process by one or more measurement-value sensors.

**Revendications**

1. Procédé de cuisson avec un compartiment de cuisson (1) ainsi qu'un dispositif de mesure (3) pour l'enregistrement de dimensions correspondant au moins à un état de cuisson de la pièce de cuisson (3), dont la valeur se modifie suite au procédé de cuisson, l'instant de l'achèvement du procédé cuisson étant extrapolé à une grandeur d'état de cuisson à différents instants au cours du procédé de cuisson, par implication des valeurs de mesure respectivement enregistrées en dernier lieu et d'une valeur finale prédéfinie, à la fin du processus de cuisson, la courbe du processus de cuisson dépend d'au moins une valeur mesurée pour une grandeur d'état de cuisson et en ce qu'au cours du processus de cuisson, il est piloté en fonction d'une ou de plusieurs valeurs dérivées d'au moins une grandeur d'état de cuisson dans le temps et qu'au cours du processus de cuisson, au moins une valeur d'une dimension de réglage de l'appareil de cuisson influençant le processus de cuisson est définie en fonction d'une valeur dérivée d'une grandeur d'état de cuisson dans le temps, au cours du processus de cuisson, **caractérisé en ce qu'**à partir d'un moment situé à un intervalle de temps prédéfini par rapport au moment déterminé pour la fin du processus de cuisson, une ou plusieurs valeurs de réglage de l'appareil de cuisson sont réglées à une valeur définie à l'avance ou en fonction d'un cycle prédéfini de valeurs dans le temps.

2. Procédé selon la revendication 1, **caractérisé en ce qu'**au cours du processus de cuisson, une valeur ou un cycle de valeurs dans le temps pour une dimension de réglage de l'appareil de cuisson sont déterminés en fonction de la dernière valeur déterminée pour une grandeur d'état de cuisson et de sa première valeur dérivée dans le temps correspondante.

3. Procédé selon l'une quelconque des revendications 1 ou 2, **caractérisé en ce qu'**une ou plusieurs valeurs sont déterminées pour des dimensions de réglage, en fonction d'une période au cours de laquelle la première valeur dérivée d'une grandeur d'état de cuisson dans le temps est sensiblement égale à zéro.

4. Procédé selon l'une quelconque des revendications précédentes, **caractérisé en ce que** la température et/ou l'humidité dans le compartiment de cuisson (1) est une dimension de réglage de l'appareil de cuisson, pour laquelle une valeur est déterminée en fonction d'une valeur dérivée d'une grandeur d'état de cuisson dans le temps.

5. Procédé selon l'une quelconque des revendications précédentes, **caractérisé en ce que** le moment d'achèvement du processus de cuisson est calculé sur la base de la dernière valeur déterminée pour une grandeur d'état de cuisson, de sa première et de sa seconde valeur dérivée correspondante dans le temps et d'une valeur finale prédéfinie pour la grandeur d'état de cuisson a la fin du processus de cuisson.

6. Procédé selon l'une quelconque des revendications précédentes, **caractérisé en ce que** la température à coeur de la pièce de cuisson est une dimension correspondant à un état de cuisson, une valeur étant déterminée pour une dimension de réglage de l'appareil de cuisson, en fonction de la courbe de température à coeur dans le temps.

7. Procédé selon l'une quelconque des revendications précédentes, **caractérisé par** une modification du mode de fonctionnement de l'appareil de cuisson à un moment qui dépend d'une valeur dérivée ou de plusieurs valeurs dérivées d'une grandeur d'état de cuisson.

8. Appareil de cuisson (1), avec au moins un capteur de valeurs de mesure (3), destiné à enregistrer des valeurs d'au moins une grandeur d'état de cuisson et concernant une caractéristique de la pièce de cuisson (2) et dont la valeur se modifie au cours du processus de cuisson, avec une unité de mémoire et un système de commande pour le pilotage automatique du processus de cuisson, qui en tant que signal d'entrée réceptionne le signal de sortie du capteur de valeurs mesurées (3) et qui a recours à l'unité de mémoire pour déterminer des valeurs de consignes pour une dimension de réglage, **caractérisé en ce que** le système de commande est conçu pour piloter le processus de cuisson conformément à un procédé selon l'une des revendications précédentes.

9. Appareil de cuisson selon la revendication 8, **caractérisé par** un dispositif pour la saisie et pour la sauvegarde de valeurs de paramètres concernant la pièce de cuisson et/ou le processus de cuisson, le système de commande impliquant une ou plusieurs de ces valeurs de paramètres en tant que dimensions d'entrée, pour le pilotage du processus de cuisson.

10. Appareil de cuisson selon la revendication 9, **caractérisé en ce qu'**il est possible de saisir une température de cuisson à coeur finale, qu'on souhaite obtenir a la fin du processus de cuisson et/ou une température dans le compartiment de cuisson souhaitée à la fin du processus de cuisson.

11. Appareil de cuisson selon l'une quelconque des revendications 9 ou 10, **caractérisé en ce qu'**il est possible de saisir une valeur pour l'humidité dans le compartiment de cuisson à la fin du processus de cuisson.

12. Appareil de cuisson selon l'une quelconque des revendications 8 à 11, **caractérisé par** une unité de mémoire, dans laquelle une affectation des valeurs dérivées d'au moins une dimension du processus de cuisson dans le temps est consignée en tant que valeurs de consignes pour les dimensions de réglage de l'appareil de cuisson.

13. Appareil de cuisson selon l'une quelconque des revendications 8 à 12, **caractérisé en ce que** les valeurs de consignes sont sauvegardées dans le système de mémoire et peuvent être interrogées par indication de données d'adresses, qui englobent une valeur pour la première dérivation d'une grandeur d'état de cuisson.

14. Appareil de cuisson selon l'une quelconque des revendications 8 à 13, **caractérisé en ce que** l'appareil de cuisson est conçu pour influencer les dimensions de réglage en mode manuel et **en ce qu'**il présente un système de mémoire pour les valeurs prédéfinies par le système de commande ou par l'utilisateur pour les dimensions de réglage, simultanément aux valeurs de mesures correspondantes pour une grandeur d'état de cuisson et/ou avec une ou plusieurs valeur(s) dérivée(s) dans le temps, de manière à ce qu'au cours d'un processus de cuisson actuel, le système de commande soit en mesure de reproduire le cycle de valeur des dimensions de réglage du processus ultérieur, sur la base des données ainsi mémorisées pour un processus de cuisson actuel et des valeurs mesurées enregistrées par un ou par plusieurs capteur(s) de valeurs mesurées.

Fig. 1

Start des Garprozesses

~ 100

Prüfung der Vorgabewerte auf Plausibilität ⇒ Werte nicht plausibel ⇒ Abbruch der Garverfahrens

110      111      112

Werte plausibel

~ 113

Speichern der Anfangswerte, Berechnung der Bräunungs- und Krustierdauer

~ 120

130

Messen der Garzustands-größe

Berechnung der Ableitungen, Berechnung der verbleibenden Gardauer

~ 140

Prüfung der noch verbleibenden Gardauer auf Null ⇒ Verbleibende Gardauer = Null ⇒ Benden der Garprozesses und Signalton

150      151      152

Vergleich mit Tabellenwerten

160

Einstellen der optimalen Garparameter und Garphase, Steuern der Heizung, Feuchtezufuhr, Belüftung

~ 170

Fig. 2

**EP 1 022 972 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2206222 A
- US 4154855 A
- DE 4032949 A1
- GB 2203320 A
- EP 0701387 A2
- US 4281022 A